# FASCICULE DE BREVET EUROPEEN

(11) **EP 0 864 763 B1**
(45) Date de publication et mention de la délivrance du brevet: **28.11.2001**
(21) Numéro de dépôt: 98400573.6
(22) Date de dépôt: 11.03.1998
(51) Int. Cl.: F16B 2/24, F16B 5/12, B60R 19/56

(54) **Dispositif de fixation amovible destiné notamment à un élément de carrosserie**
Lösbare Befestigungsvorrichtung insbesondere für ein Karosseriebauteil
Releasable connector in particular for a body element

(30) Priorité: 14.03.1997 FR 9703075
(43) Date de publication de la demande: 16.09.1998
(73) Titulaire: HUTCHINSON, 75008 Paris (FR)
(72) Inventeur: Seguin, Jean-François, 86220 Ingrandes (FR); Triat, Jean, 86220 Dange Saint Romain (FR); Venault, Gilles, 86220 Oyre (FR)
(74) Mandataire: Jacquard, Philippe Jean-Luc

(56) Documents cités:
- DE-A- 4 142 804
- DE-B- 1 244 485
- FR-A- 1 194 368

## Description

La présente invention a pour objet un dispositif de fixation amovible destiné notamment à un élément de carrosserie de véhicule automobile.

On connaît du Brevet Allemand DE-PS-4 142 804 (EBIE) délivré le 6 avril 1995, un dispositif de fixation amovible, destiné à un élément de carrosserie, en l'espèce un volet latéral rabattable destiné à un camion, et qui comporte une pince présentant une région centrale plane sur les bords de laquelle s'articulent deux branches plates dont chacune présente une première région rentrante venant s'appuyer sur une région complémentaire d'un support, les branches se terminant par une région évasée permettant d'écarter les branches de la pince et de dégager la pince dudit support de manière à désolidariser du support l'élément de carrosserie auquel la pince est fixée.

Ce dispositif de fixation par pince est relativement aisé à mettre en oeuvre, mais par contre, il présente l'inconvénient d'être relativement sensible aux vibrations.

L'idée de base de l'invention est de munir le dispositif de fixation d'une butée élastique permettant à la fois d'améliorer le positionnement du dispositif de fixation et de réduire les vibrations.

L'invention concerne ainsi un dispositif de fixation amovible tel que défini ci-dessus caractérisé en ce qu'il comporte une pince élastique ayant une face de base qui repose sur la région centrale plane de la pince et qui longe une région proximale de chacune des deux branches qui est adjacente à la région centrale plane, une face supérieure de la pièce élastique opposée à la face de base venant en butée sur une face de base du support lorsque le dispositif de fixation est monté sur le support.

Les régions proximales sont avantageusement des deuxièmes régions rentrantes, c'est-à-dire dirigées vers l'intérieur de la pince, ces deuxièmes régions rentrantes étant en contact avec des bords rentrants correspondants de la pièce élastique.

La pince peut être un profilé dont les génératrices sont parallèles à une direction principale XX', et la face supérieure de la pièce élastique formant butée présente de préférence une rainure parallèle à ladite direction principale XX'.

La pièce élastique formant butée peut présenter une ouverture dont l'axe est perpendiculaire à la face de base et à la face supérieure et qui s'étend entre ces deux faces. La région centrale de la pince peut présenter au moins une ouverture de passage pour une vis, cette ouverture étant avantageusement coaxiale à l'ouverture ménagée dans la pièce élastique lorsque celle-ci est placée en position dans la pince.

A titre de variante, l'ouverture peut être une boutonnière dont l'axe longitudinal est parallèle à l'axe principal XX'.

D'autres caractéristiques et avantages de l'invention apparaîtront mieux à la lecture de la description qui va suivre, donnée à titre d'exemple non limitatif, en liaison avec les dessins,dans lesquels :
- la figure 1 eprésente une pince selon un mode de réalisation préféré de l'invention
- les figures 2a et 2b représentent une pièce élasique selon une mode de réalisation préféré de l'invention
- la figure 3 représente un dispositif de fixation mettant en oeuvre la pince et la pièce élastique des figures 1, 2a et 2b, en position montée.

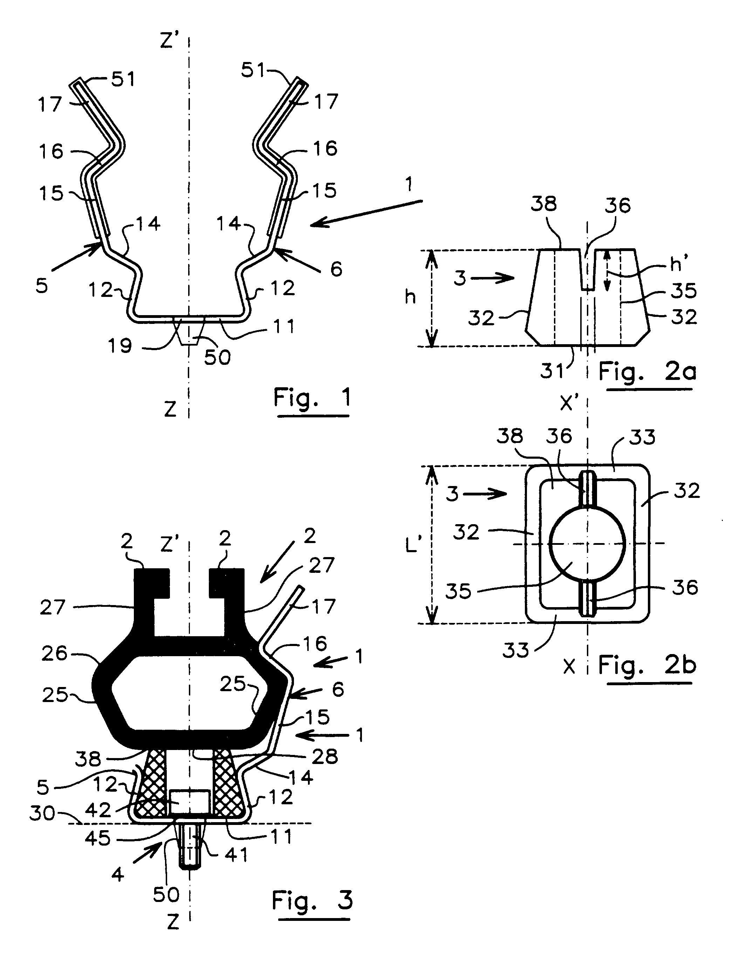

La pièce 1 représentée à la figure 1 est réalisée sous forme d'un tronçon de profilé de longueur L, cette longueur L étant prise perpendiculairement au plan du dessin et parallèlement à la direction dite principale XX' du profilé. La pince 1 présente une région de base 11 aux extrémités latérales de laquelle s'articulent deux branches 5 et 6.

Chacune des branches 5 et 6 présente successivement une région proximale rentrante 12, une région 14 évasée, une région 15 évasée, mais dont l'orientation est plus proche de l'axe ZZ' de symétrie de la pince 1 que celle de la région 14, une région 16 rentrante, et une région de préhension 17 évasée vers l'extérieur.

La pièce élastique 3 dont la longueur L' est inférieure ou égale et de préférence égale à la longueur L de la pince, présente une face de base plane 31 et une face supérieure plane 38 bordée sur deux côtés par des régions inclinées rentrantes 32 dont l'inclinaison est sensiblement égale à celle des régions 12. La pièce élastique 3 comporte également une ouverture 35 dont l'axe ZZ' est perpendiculaire aux faces 31 et 38 et qui débouche dans l'une et l'autre de ces faces.

Enfin, une fente 36 dont l'axe est parallèle à l'axe XX' est ménagée dans la partie médiane de la face supérieure 38 et sa hauteur h'est de préférence comprise par exemple entre le tiers et la moitié de la hauteur h de la pièce élastique 3.

Dans la position montée représentée à la figure 3, chacune des régions 16 de la pince 1 est maintenue sur une région plane rentrante 26 d'un support tel qu'un profilé 2 qui est par exemple solidaire d'un élément de structure d'un véhicule. L'inclinaison de ces régions 26 par rapport à l'axe ZZ' est sensiblement la même que celle de la région 16 de la pince en position libre C (cf. figure 1). La pièce élastique 3 est fixée à l'aide d'une vis 4 dont la partie filetée est engagée dans une couverture 19 de la région de base 11 de la pince 1, la vis 4 étant maintenue également à l'aide d'une collerette anti-désserrage 45 bloquée entre la tête 42 de la vis et la région de base 11.

Le montage du dispositif de fixation s'effectue de la manière suivante :

La pièce élastique 3 est introduite dans la pince 1 en faisant coulisser ses bords inclinés 32 le long des régions complémentaires 12, et ce parallèlement à l'axe principal XX', jusqu'à ce que les axes du trou 35 et de l'ouverture 19 coïncident. Ensuite, la vis 4, dont la tête est équipée de la collerette anti-desserrage 45, est introduite dans l'ouverture 19 et la pièce élastique 3 peut être alors fixée à un élément de carrosserie 30 tel qu'un capot latéral rabattable 30.

L'élément de carrosserie 30 peut être équipé d'un ou plusieurs dispositifs de fixation, et chaque dispositif de fixation peut lui-même comporter une ou plusieurs vis 4.

La pièce 1 peut alors être fixée par encliquetage de la ou des pièces 1 dans un profilé 2 ou dans une ou plusieurs sections de profilé 2, de sorte que la région rentrante 16, dirigée vers l'intérieur de la pièce 1, vienne porter sur la région rentrante complémentaire 26 du ou des profilés 2. La pièce élastique 3 vient en butée par sa face 38 sur la face de base 28 du profilé 2. On choisit de préférence les cotes pour que, dans la position encliquetée de la pièce 1, les branches 5 et 6 aient la même ouverture que lorsque la pièce 1 est à l'état libre (Fig.1), tout en assurant un contact effectif entre la face 38 de la pièce élastique 3 et la face 28 du support ou profilé 2.

Le dispositif peut être désolidarisé du profil en agissant sur les prolongements divergents 17, voire par simple traction sur l'élément 30.

La mise en oeuvre d'une pièce élastique selon l'invention permet un meilleur amortissement des vibrations et une diminution du bruit ainsi qu'une meilleure précision de la position de la pince 1. En effet, la butée 38 permet de limiter le déplacement en phase d'encliquetage (ou « clipsage ») par contact entre cette butée 38 et la face 28 du profil 2, et elle assure également l'immobilisation de la pince 1 sur le profilé 2 après sa mise en place par encliquetage.

Le dispositif selon l'invention permet d'obtenir un certain nombre de résultats remarquables à l'aide d'un dispositif qui reste simple, les formes aménagées sur la pièce 1 et sur la pièce élastique 3 formant butée permettant en effet :
- d'emprisonner la pièce 3 après introduction de la vis 4, ceci étant obtenu par la forme de la pince 1 (région 12) et la présence de la vis 4.
- d'immobiliser la pièce 3 dans la pince 1 lors des phases d'encliquetage ou de désolidarisation de la pince 1, ceci étant facilité par la présence de la fente 36 sur la pièce élastique 3, qui augmente l'élasticité de celle-ci.
- d'accéder à la vis 4 pour pouvoir ajuster la position relative de la pince 1 et du profilé 2 sans faire chuter la pièce 3 formant butée, ceci étant obtenu grâce à la présence du trou 35 et de l'ouverture 19 sur la pince, cette ouverture 19 étant de préférence en forme de boutonnière dont l'axe longitudinal est parallèle à l'axe principal XX' de manière à permettre un réglage en position le long de cet axe principal XX'.

On remarquera par ailleurs que la pièce 3 n'est pas pincée par la vis 4, ce qui fait qu'il n'est pas besoin d'ajouter de douille anti-fluage ou d'insert surmoulé ou collé, d'où une simplification de la réalisation du dispositif.

La pince 1 du dispositif de fixation selon l'invention présente avantageusement un dispositif anti-rotation coopérant avec l'élément 30, ce dispositif anti-rotation étant par exemple une languette 50 solidaire de la région centrale 11 et disposée par exemple au voisinage de l'ouverture 19.

Les régions 15 et/ou 16 et/ou 17 des branches 5 et 6 sont avantageusement revêtues d'une couche de matériau souple, par exemple une matière plastique, d'épaisseur suffisante pour amortir les bruits et éviter l'usure du profilé pincé 2.

## Revendications

1. Dispositif de fixation amovible d'un élément, notamment un élément de carrosserie, comportant une pince présentant une région centrale plane sur des bords de laquelle s'articulent deux branches dont chacune présente une première région rentrante permettant le maintien de la pince sur une région complémentaire d'un support, tel qu'un profilé, ainsi qu'une région de préhension s'étendant entre ladite première région rentrante et l'extrémité de la branche correspondante, la région de préhension permettant d'écarter lesdites branches pour dégager la pince dudit support, ladite pince présentant au moins un moyen permettant de la fixer sur ledit élément **caractérisé en ce qu'**il comporte une pièce élastique (3) ayant une face de base (31) qui repose sur la région centrale plane (11) de la pince (1) et qui longe une région proximale (12) de chacune des deux branches (5,6) qui est adjacente à la région centrale plane (11), une face supérieure (38) de la pièce élastique (3) opposée à la face de base (31) venant en butée sur une face de base (28) du support (2) lorsque le dispositif de fixation est monté sur le support (2).

2. Dispositif selon la revendication 1, **caractérisé en ce que** ladite région proximale est une deuxième région rentrante (12), lesdites deuxièmes régions rentrantes (12) étant en contact avec des bords rentrants (32) correspondants de la pièce élastique (3).

3. Dispositif selon les revendications 1 ou 2, **caractérisé en ce que** la pince (1) est un profilé dont les génératrices sont parallèles à une direction dite principale (XX').

4. Dispositif selon la revendication 3, **caractérisé en ce que** ladite face supérieure (38) de la pièce élastique (3) formant butée présente une rainure (36) parallèle à ladite direction principale (XX').

5. Dispositif selon une des revendications précédentes, **caractérisé en ce que** la pièce élastique (3) formant butée présente une ouverture (35) ayant un axe qui est perpidenculaire à la face de base (28) et à la face supérieure (38), et qui s'étend entre la face de base (28) et la face supérieure (38).

6. Dispositif selon une des revendications précédentes, **caractérisé en ce que** la région centrale (11) de la pince (1) présente au moins une ouverture de passage (19) pour une vis (4) constituant un dit moyen de fixation de la pince (1) sur l'élément (30).

7. Dispositif selon les revendications 5 et 6, **caractérisé en ce que** l'ouverture de passage (19) ménagée dans la région centrale de la pince (1) est disposée de manière à être coaxiale à l'ouverture (35) ménagée dans la pièce élastique (3).

8. Dispositif selon la revendication 6, **caractérisé en ce que** l'ouverture de passage (19) est une boutonnière dont l'axe longitudinal est parallèle à la direction principale (XX').

9. Dispositif selon une des revendications précédentes, **caractérisé en ce qu'**au moins une région (15, 16, 17) des branches (5,6) de la pince (1) est revêtue d'une couche de matériau souple.

10. Dispositif selon une des revendications précédentes, **caractérisé en ce que** la pince (1) est pourvue d'un dispositif anti-rotation (50) coopérant avec ledit élément (30).

## Patentansprüche

1. Einrichtung für die auswechselbare Befestigung eines Elements, insbesondere eines Karosserieelements, enthaltend eine Klemme, die einen zentralen ebenen Bereich aufweist, über deren Ränder zwei Schenkel beweglich verbunden sind, von denen jeder einen ersten zurückspringenden Bereich aufweist, welches das Zurückhalten bzw. die Sicherung der Klemme auf einem komplementären Bereich eines Trägers, wie eines Profils, gestattet, sowie einen Greifbereich, der sich zwischen dem ersten, zurückspringenden Bereich und dem Ende des entsprechenden Schenkels erstreckt, wobei es der Greifbereich gestattet, die Schenkel zum Außereingrifftreten der Klemme von dem Träger zu spreizen, wobei die Klemme wenigstens ein Mittel aufweist, das es gestattet, sie auf dem genannten Element zu befestigen, **dadurch gekennzeichnet, dass** sie ein elastisches Teil (3) enthält, das eine Basisfläche (31) hat, die auf dem zentralen ebenen Bereich (11) der Klemme (1) ruht und die entlang eines proximalen Bereichs (12) von jedem der beiden Schenkel (5, 6) verläuft, der benachbart dem zentralen ebenen Bereich (11) ist, wobei eine obere Fläche (38) des elastischen Teils (3), die der Basisfläche (31) entgegengesetzt ist, in Anlage an eine Basisfläche (28) des Trägers (2) kommt, wenn die Befestigungseinrichtung auf dem Träger (2) befestigt wird.

2. Einrichtung gemäß Anspruch 1, **dadurch gekennzeichnet, dass** der proximale Bereich ein zweiter zurückspringender Bereich (12) ist, wobei die zweiten zurückspringenden Bereiche (12) in Kontakt mit entsprechenden zurückspringenden Rändern (32) des elastischen Teils (3) sind.

3. Einrichtung gemäß Anspruch 1 oder 2, **dadurch gekennzeichnet, dass** die Klemme (1) ein Profil ist, dessen Erzeugende parallel zu einer Hauptrichtung (XX') sind.

4. Einrichtung gemäß Anspruch 3, **dadurch gekennzeichnet, dass** die obere Fläche (38) des elastischen Teils (3), die einen Anschlag bildet, eine Nut (36) aufweist, welche parallel zu der Hauptrichtung (XX') ist.

5. Einrichtung gemäß einem der vorhergehenden Ansprüche, **dadurch gekennzeichnet, dass** das einen Anschlag bildende elastische Teil (3) eine Öffnung (35) aufweist, die eine Achse hat, welche senkrecht zu der Basisfläche (28) und der oberen Fläche (38) ist, und welche sich zwischen der Basisfläche (28) und der oberen Fläche (38) erstreckt.

6. Einrichtung gemäß einem der vorhergehenden Ansprüche, **dadurch gekennzeichnet, dass** der zentrale Bereich (11) der Klemme (1) wenigstens eine Durchgangsöffnung (19) für eine Schraube (4) aufweist, die ein Mittel für die Befestigung der Klemme (1) auf dem Element (30) bildet.

7. Einrichtung gemäß den Ansprüchen 5 und 6, **dadurch gekennzeichnet, dass** die Durchgangsöffnung (19), die in dem zentralen Bereich der Klemme (1) angeordnet ist, in der Art und Weise angeordnet ist, dass sie koaxial zu der Öffnung (35) ist, welche in dem elastischen Teil (3) angeordnet ist.

8. Einrichtung gemäß Anspruch 6, **dadurch gekennzeichnet, dass** die Durchgangsöffnung (19) eine längliche Aussparung ist, deren Längsachse parallel zu der Hauptrichtung (XX') ist.

9. Einrichtung gemäß einem der vorhergehenden Ansprüche, **dadurch gekennzeichnet, dass** wenigstens ein Bereich (15, 16, 17) der Schenkel (5, 6) der Klemme (1) mit einer Schicht aus weichem bzw. elastischem Material verkleidet ist.

10. Einrichtung gemäß einem der vorhergehenden Ansprüche, **dadurch gekennzeichnet, dass** die Klemme (1) mit einer Antirotations- bzw. Drehverhinderungseinrichtung (50) versehen ist, die mit dem genannten Element (30) zusammenwirkt.

## Claims

1. Device for detachably fastening in place a member, particularly a bodywork member, comprising a clip having a flat central region to the edges of which are hingeably joined two arms each of which has a first re-entrant region enabling the clip to be held in position against a complementary region of a support such as a profile, and a gripping region extending between said first re-entrant region and the end of the arm concerned, the gripping region enabling said arms to be moved apart to release the clip from said support, said clip having at least one means enabling it to be fastened to said member, **characterised in that** it comprises a resilient part (3) having a base face (31) which rests against the flat central region (11) of the clip (1) and which borders a proximal region (12) of each of the two arms (5,6) which is adjacent to the flat central region (11), an upper face (38) of the resilient part (3) which is opposite from the base face (31) coming into abutment against a base face (28) of the support (2) when the fastening device is fitted to the support (2).

2. Device according to claim 1, **characterised in that** said proximal region is a second re-entrant region (12), said second re-entrant regions (12) being in contact with the corresponding re-entrant edges (32) of the resilient part (3).

3. Device according to claim 1 or 2, **characterised in that** the clip (1) is a profile whose generatrices are parallel to a direction termed main (XX').

4. Device according to claim 3, **characterised in that** said upper face (38) of the resilient part (3) which forms *an* abutment has a groove (36) parallel to said main direction (XX').

5. Device according to any of the foregoing claims, **characterised in that** the resilient member (3) which forms an abutment has an opening (35) having an axis which is perpendicular to the base face (28) and to the upper face (38) and which extends between the base face (28) and the upper face (38).

6. Device according to any of the foregoing claims, **characterised in that** the central region (11) of the clip (1) has at least one opening (19) for a screw (4), which forms a said means of fastening the clip (1) to the member (30), to pass through.

7. Device according to claims 5 and 6, **characterised in that** the opening (19) for passage which is formed in the central region of the clip (1) is arranged to be co-axial to the opening (35) which is formed in the resilient part (3).

8. Device according to claim 6, **characterised in that** the opening (19) for passage is an oblong opening whose longitudinal axis is parallel to the main direction (XX').

9. Device according to any of the foregoing claims, **characterised in that** at least one region (15,16,17) of the arms (5,6) of the clip (1) is coated with a flexible material.

10. Device according to any of the foregoing claims, **characterised in that** the clip (1) is provided with an anti-rotation device (50) which co-operates with said member (30).
